## Europäisches Patentamt

(19) **European Patent Office**

**Office européen des brevets**

(11) Publication number: **0 128 110 B1**

(12) **EUROPEAN PATENT SPECIFICATION**

(45) Date of publication of patent specification: **26.10.88**

(51) Int. Cl.⁴: **B 24 B 19/14, B 24 B 49/12**

(21) Application number: **84630090.3**

(22) Date of filing: **05.06.84**

(54) **Method and apparatus for grinding turbine engine rotor assemblies.**

(30) Priority: **07.06.83 US 501982**
**07.06.83 US 501983**

(43) Date of publication of application:
**12.12.84 Bulletin 84/50**

(45) Publication of the grant of the patent:
**26.10.88 Bulletin 88/43**

(84) Designated Contracting States:
**DE FR GB IT**

(56) References cited:
**DE-A-2 555 493**
**DE-A-2 700 713**
**US-A-3 835 591**
**US-A-3 992 627**

**SOVIET INVENTIONS ILLUSTRATED,
Mechanical Section P61, week E 32, 22th
September 1982, abstract no. k6717, Derwent
Publications Ltd., London, GB; & SU - A - 872
219 (BROVKO A.N.) 25-10-1981**

**INSTRUMENTATION SOCIETY OF AMERICA
(ISA) 20th Annual Instrumentation Symposium
(A51)74228, 21-23th May 1974, pages 133-139;
W. DRINKUTH et al.: "Laser proximity probes
for the measurement of turbine blade tip
running clearances"**

(73) Proprietor: **UNITED TECHNOLOGIES
CORPORATION
United Technologies Building 1, Financial Plaza
Hartford, CT 06101 (US)**

(72) Inventor: **Drinkuth, William Howard
Reidy Hill Road
Amston Connecticut 06231 (US)**
Inventor: **Selleck, Franklin George
Penfield Hill Road
Portland Connecticut 06480 (US)**
Inventor: **Bires, Robert Joseph
52 Cobblestone Road
Glastonbury Connecticut 06033 (US)**
Inventor: **Miller, Robert John
205 Hany Lane
Vernon Connecticut 06066 (US)**

(74) Representative: **Waxweiler, Jean et al
OFFICE DENNEMEYER S.à.r.l. P.O. Box 1502
L-1015 Luxembourg (LU)**

## Description

Technical field

The present invention involved metalworking, specifically the process and machinery for grinding turbomachine rotor assemblies.

Background

Most aircraft gas turbine engines, as well as axial flow turbomachines used in many other applications, have within them disks or rotors which carry a multiplicity of removable blades. Such structures are used in both the compressor and the turbine parts of the engine to respectively compress and expand the working fluid. In some instances the rotating blades have shrouds at their outermost tips and are connected at these locations. More commonly, modern engines have blades that lack shrouds and are only supported at their roots in the rotor disk.

For high efficiency, it is desired to have the closest possible fit between the tips of the rotating blades and the sealing structure of the circumscribing case of the originally manufactured engine. During use, especially during the maneuvers which aircraft accomplish, there is occasionally rubbing between the blades and the circumscribing abradable sealing ring. In addition, other degradation of the blades occurs as an inevitable result of long hours of use. As a result, the clearances between the blade tips and the case are increased and it is an object of engine overhaul to restore these clearances.

To achieve good fits the rotor blades must be precisely ground to within ±0.025 mm so that they are all at a constant radial distance from the center line of the engine. This presents a substantial machining problem, both in original part manufacture and in overhaul.

While the tolerances sought currently are tighter than previously, there has always been a desire to have bladed rotors fit well. Primarily this has been achieved by separately machining the rotors and blades to close tolerances but this has resulted in an accumulation of tolerances greater than now is acceptable. Consequently, it is preferred to machine blades while they are a part of a disk and blade assembly. Of course, because the blades are removable they necessarily fit somewhat loosely in the rotor disk. Thus, during machining shims have been placed under the blades to thrust them radially outward to approximately the position they assume during use. Low speed workpiece rotation, common in cylindrical grinding, also tends to have the same effect, but in neither case is the seating comparable to that obtained during high speed engine rotation. Typically, horizontal rotary grinding machines have been used to grind the assemblies while they rotate at no more than a few hundred revolutions per minute.

However, the forces accompanying slow rotation or from use of shims are not powerful. It has been found that the older tip grinding processes produce a variation in length at individual blades which is too great, much more than ±0.025 mm on a 0.25—0.30 m diameter rotor assembly. Additionally, there is a particular rotor construction wherein the slot which receives the multiplicity of blades runs circumferentially around the rim of the disk. With this configuration, it is not practical to insert shims. Thus, during machining either the blades and their retention slot have been configured to limit radial inward movement or resilient cushions have been used to sandwich the rotor and thus capture the blades during machining. Neither of these approaches is entirely satisfactory in producing the desired accuracy.

Soviet Inventions Illustrated, Mechanical Section P61, week E32, September 22, 1982, abstract No. K6717, Derwent Publications Ltd., London, GB; & SU—A—872 219 (Brovko A.N.) 25.10.1981, discloses a turbine blade end surface grinder. The blade roots are rigidly secured in slots of a rotor located in a protective case. The grinding wheel dresses the ends of the blades to a given length. During the grinding cycle the rotor is revolved at a frequency causing a centrifugal force on the blades exceeding the cutting force of the grinding wheel.

The rotor is revolved at 1500—1700 RPM and the grinding wheel at 2000 RPM. The grinding wheel is fed into the blades at a speed of 40 mm/min. giving a grinding depth of 0.5 mm. This prevents blade vibration.

A further problem in machining rotors involves the means for measuring the diameter of a machined rotor assembly. The diameter of the bladed rotor or fixture has traditionally been measured with the conventional gaging associated with machine shops, including in recent times the use of scanning laser micrometers. Generally, measurements are ordinarily taken when the part is not rotating although the speed of reading of various non-contact electro-optical measuring systems does not permit measurements to be taken while the workpiece is rotating at a relatively low velocity of about 25 rpm. Individual blade dimensions measured under static or trivial rotational speeds will not be indicative of those in a rapidly rotating structure. There have been developed non-contact systems for measuring dimensions of high speed rotating machinery. For instance, Patent No. 3,992,627 to Stewart discloses the use of x-rays to measure clearances in operating gas turbine engines. The technical publication co-authored by Drinkuth (one of the inventors herein) et al, "Laser Proximity Probes for the Measurement of Turbine Blade Tip Clearances" Instrumentation Society of America 20th Annual Instrumentation Symposium, May 21—23, 1974, discloses the use of a laser triangulation system to measure tip clearance in a gas turbine engine. In the Drinkuth et al system the reflected laser beam position is measured with a vidicon and cathode ray tube display and the system has a sampling time of the order of 0.0016 seconds or greater, a speed insufficient for use with the grinding speeds needed in the present invention. U.S. Patent No. 4,074,104 to Fulkerson discloses a grinding method utilizing a triangulating laser beam for position measurement, where the beam is prefocused at a particular point representing the desired final dimension.

None of the foregoing measuring systems has provided anything more than an average reading of the dimensions of a rapidly rotating article. The spinning articles may have had variation in radial dimension around their circumference but the configurations of the prior systems could not output this information. Thus the dynamic readings for a bladed rotor were deficient in not revealing blade to blade variations which can cause leakage or excess wear of the circumscribing seal.

Also, if there are a number of short blades in the rotor assembly, machining to an average gage length will produce a greater than desired dimension in the longer blades. Thus there have been problems in both the actual machining procedures and the gaging procedures used in machining rotors, and the present invention is directed to their solution.

An object of the invention is to grind rotor assemblies to radial accuracies of the order of ±0.025 mm or better. A further object of the invention is to identify in a rotor assembly the extent to which particular blades are deviant from the average radius of the rotor.

The above object is achieved in a method according to the preamble of claim 1, by the method steps recited in the characterizing part thereof. Advantageous embodiments are claimed in the sub-claims.

The rotor assembly comprised of a multiplicity of bladed mounted radially in a disk is machined by spinning the assembly at a critically high speed, sufficient to cause the blades to seat properly in the rotor and overcome any resilient forces or lack of tolerance which prevent proper seating at lower speeds. The rotational speed is sufficient to counteract the force of the machining medium on the blade tip. The preferred medium is a grinding wheel.

The rotational speed of the assembly is such that there is caused a radial acceleration on the blades of at least 700 times the force of gravity or about 6,870 m/s². Preferably the rotational speed produced an acceleration of about 11,100 m/s² or about 1100 times gravitational force. At less than the critical speed rotors can be ground, but high tolerances of the order of ±0.025 mm are not achieved. For a typical 0.3 m radius rotor assembly, a preferred speed will be about 2000 rpm.

The rotor having airfoil blades is rotated in a direction such that the surrounding air impinges on the blades in the same direction as impinges the working fluid during use of the rotor assembly. Preferably, the rotating speed will be sufficient to cause the surrounding air to flow axially in substantial quantity, compared to the radial flow which ensues at too low a speed.

The necessity for high rotational speeds to obtain accuracy in grinding produces unwanted effects in that the tangential velocity of blade tips is very high, in the range 60 m/s. This is in excess of the permissible dry grinding speed for titanium alloys and certain other materials. Thus, the grinding medium is moved in the same direction as the tangential velocity at the point where the blade tips are contacted, to provide a reduced relative or grinding velocity in the range 20—40 m/s. When a grinding wheel is used, the wheel is counter-rotated to the assembly to achieve the objective. In the preferred practice of the invention, on titanium compressor blades it is found that a grinding rate of less than 0.0004 mm/s is effective in reducing the formation of burrs. While the material is progressively removed from the blade tips at a first circumferential location, continuous measurements are made of the individual blade lengths at a second circumferential location, preferably 135° away from the first. A laser triangulation system capable of very fast reading rates is used, sufficient to provide data on individual blade tip lengths which pass by the measuring location at intervals of less than 0.004 seconds. The individual blade data is used to control the action of the grinder.

In the preferred embodiment of the invention a photo diode detector signal is utilized to command a linear diode array camera to read the reflected laser beam spot when a blade is present. A digital processor system receives the camera output and calculates the centroid of the beam spot, to more accurately measure the length of the particular blade. Angular position information is also provided to the processor and correlated with the individual blade length readings to enable display of identifiable blade numbers and lengths. The laser measuring system is capable of reading as many as 5,000 blades per second, reflecting blade-to-blade interval times of less than 0.0002 seconds.

The invention has shown that grinding techniques used heretofore have not produced the accuracies which were thought to exist based on slower reading electro-optical and other measuring systems. Now, the grinding techniques can be adjusted to provide better results. A most significant change reflected in the apparatus and method of the invention, is grinding at a sufficiently high speed of assembly rotation. Tolerances of ±0.025 mm are commonly achieved and result in closer and more uniform contact of the blades with the seal of an engine, providing higher efficiency and energy saving.

Brief description of the drawings

Figure 1 shows a multi-stage gas turbine rotor as it is positioned for grinding.

Figure 2 shows a cross-section through one stage of the rotor in Figure 1, illustrating how blades are mounted around the periphery of a disk to form a rotor assembly.

Figure 3 is a semi-schematic end view of the rotor assembly grinding apparatus for applying the method of the invention.

Figure 4 is a perspective view showing how a laser beam is impinged on the tips of passing blades by means of a head assembly.

Figure 5 is a schematic representation similar to Figure 3 but showing more detail.

Figures 6—9 are graphical presentations of blade length data obtained in the use of the invention. Figure 6 shows a rotor which has been ground to a desired close tolerance while Figure 7 shows a rotor that has a few blades which are excessively long. Figure 8 shows good results when the requisite high rotational speed is used while Figure 9 shows the non-uniformity resulting from too low a speed.

Best mode for carrying out the invention

The invention is described in terms of the grinding of a one stage of a high pressure compressor rotor assembly for a Model PW2037 gas turbine engine made by Pratt & Whitney Aircraft, East Hartford, Connecticut, USA.

The high pressure compressor rotor assembly for the aforementioned PW2037 engine is comprised of a multiplicity of different axial flow stages attached to each other. These stages have slightly different outside diameters and they are finish ground to such diameters in sequence. The invention herein is described in terms of machining of one of these stages, which for simplicity is referred to as a rotor assembly. A rotor assembly is comprised of a disk having a circumferential slot in which are contained 50—75 titanium alloy compressor blades. Alpha beta titanium alloys such as Ti—6Al—4V, Ti—8Al—1V—1Mo, Ti—6Al—2Sn—4Zr—2Mo and Ti—6Al—2Sn—4Zr—6Mo are common in rotor blades. Iron and nickel base alloys are used also.

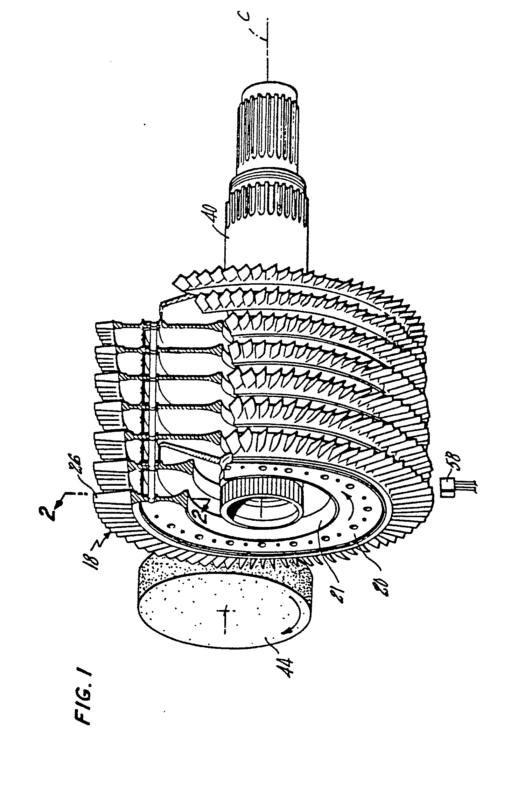

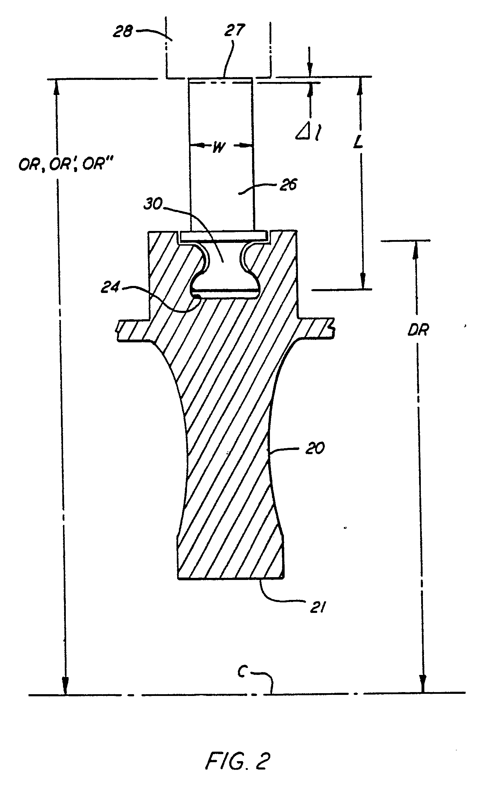

Figure 1 shows in fragment how a rotor assembly 18 is ground and will be referred to again. Figure 2 shows a cross section through the diametrical plane of the rotor assembly including a disk 20 having an outside radius DR and a bore 21 with a longitudinal centerline axis C. A circumferential slot 24 runs around the periphery of the disk and contained therein is a multiplicity of blades 26, one of which is shown in Figure 2. The blade has a length L of about 64 mm. At its tip it has a chord length W of about 33 mm and a thickness of about 2.5 mm. In the Figure, the blade 26 is shown as it contacts the circumscribing airseal 28 (shown in phantom) which lines the interior of the engine case. In similar fashion it contacts the grinding wheel 44 in the practice of the invention.

In this description of the invention, it is desired that the blade length L be reduced by an amount $\Delta l$ so that the multiplicity of tips 27 of blade 26 in the rotor will give to the assembly a specified static radius OR. (The radius OR is directly related by calculation to the radius achieved in engine operation, when there is elastic and thermal expansion. For the PW2037 engine OR is about 0.28—0.36 m.) The blades are usually ground at a conical angle with respect to axis C by appropriately shaping the grinding wheel. Thus the representation of a single radius OR will be understood as a simplification. Typically, the rotor will have a rotational speed of about 8—12,000 rpm under normal operating conditions. Under such conditions, the root 30 of each blade is forced very tightly against the restraining slot 24 and there is considerable stress and resultant radial strain in the blade.

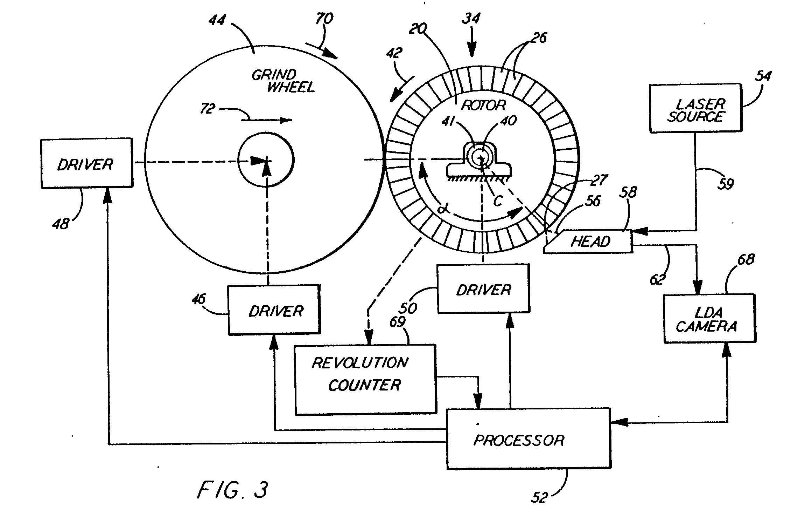

The essential aspects of the apparatus used in the practice of the invention are shown in Figures 1 and 3. The rotor assembly 34, comprised of a disk 20 and a plurality of blades 26, is mounted rotatably on a shaft 40 similar to the ordinary manner in which a circular workpiece is mounted in a horizontal spindle centertype cylindrical grinding machine. Sometimes the shaft is integral with the assembly. High precision bearings having low radial clearance and being similar to those used on rotor balancing machines should be used to support the shaft. Vibration is monitored during initial spinning of the rotor and if present it is eliminated. The shaft 40, and therefore the rotor assembly 34, is rotated by an electric motor driver 50 in the direction of normal engine rotation of the rotor assembly, as indicated by the arrow 42. A grinding wheel 44 rotates and translates to and from the rotor within the same plane as the plane of the disk. (Translation parallel to the axis C is optional, depending on the exact particulars by which the conical angle is achieved.) These motions are controlled respectively by the drivers 46, 48. All drivers are controlled by the processor 52.

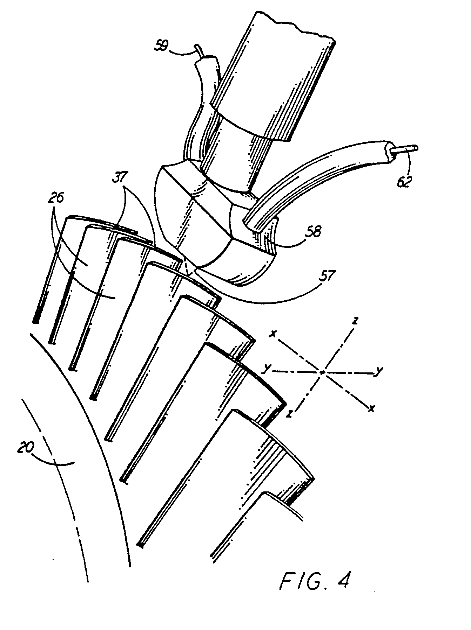

A laser gaging system is used to measure the radial position of each individual blade tip (and thus the blade length) during the grinding procedure. This system is described in more detail below, but with reference to Figures 3 and 4, in summary it is comprised of a head 58 which causes a laser beam 56 to impinge on the passing blade tips 27. The reflected beam position is measured by camera 68 and converted into a blade length signal for the processor 52. The motion of the drivers 46, 48, 50 is accordingly controlled to achieve the desired blade length. The laser measuring head 58 is properly positioned radially using conventional machine shop techniques, prior to placement of the rotor in its bearing mounting assembly. The circumferential location of the laser beam's point of impingement on the blade tips is important. It must be sufficiently removed circumferentially (in the direction of rotation) from the point of grinding, to allow restoration of locational stability to the blades after possible deflection during grinding and to avoid impingement by grinding sparks and dust 71. It must be located at least 45° from the point of grinding, and preferably is located between 135—270°, as the angle $\alpha$ is shown in Figure 3.

The driver 48 is actuated to translate (infeed) the grinding wheel 44 in the direction of arrow 72 toward the centerline of rotation of the rotor assembly until a desired dimension dynamic radius OR' is achieved. About 0.4—0.8 mm of material typically will be removed from blade tips in process. In the preferred practice of the invention, the PW2037 rotor assembly is rotated at a speed of 2000 rpm. This produces a centripetal acceleration on each blade of about 11,100 m/sec$^2$, on or about 1130 g, where g is acceleration gravity. This corresponds with a tangential tip velocity of about 60 m/s. Since this tip velocity is in excess of the known range which is feasible for machining titanium alloy without unacceptable burning, cracking, or residual stress, the grinding wheel 44 is counter-rotated in a direction 70 as shown in the Figures, so that it rotates in a direction opposite that of the assembly. This means that at the point of contact the abrasive surface is moving in the same direction as the blade tip. The peripheral speed of the wheel is set so that the relative grinding velocity is in the range of 20—40 m/s. A typical vitreous bond alumina wheel is used, such as a 0.76 m diameter 90—100 grit, L-0 hardness wheel. Coolant is not used to avoid disruption of the laser gage and to avoid the necessity of cumbersome containment shielding.

Early work in rotor grinding, where the rotor is rotated at a few hundred r.p.m. and where the centripetal acceleration on the blade is of the order of 100 times the force of gravity have only made rotors which are accurate to a radial tolerance of no better than ±0.075 mm. Now, experiments using the equipment described herein have shown that there are certain parameters which are critical to obtaining better tolerances, of the order of ±0.025 mm radial tolerance. The rotor first should rotate in the direction which causes air to impinge on the blades in the same manner as gases do during use. Generally, this means rotating in the direction of the concave side of the airfoil, except when the aerodynamic forces will be trivial, as they may be with certain turbine rotors. Second, the rotor should rotate at a speed sufficient to produce in the blades a centripetal acceleration of 700 g (6,870 m/s$^2$). Preferably the rotational speed is such that it produces a radial acceleration of about 1100 g (10,800 m/s$^2$). At slower speeds high accuracies are not achieved, evidently due to improper initial seating or unsustained seating of the blades during grinding. For example, a PW2037 rotor of 0.28 m radius OR will be rotated at 1700 r.p.m. or higher. Larger rotors of 0.38 m radius will be rotated at 1400 r.p.m. or higher.

The high rotational speeds also mean that the time interval between passage by a point of adjacent blades is very short, at less than about 0.004 sec. For example, a 100 blade PW2037 rotor of 0.28 m radius rotating at a minimum good speed of 1700 r.p.m. will have a blade tip velocity of about 50 m/s and a blade-to-blade interval time of about 0.00035 seconds. If the rotor has 50 blades, the time would be double at 0.0007 seconds. A similar style rotor of 0.30 m radius at a preferred 2000 r.p.m. will have a tip velocity of about 63 m/s, and the time interval will be of the order of 0.0006 seconds for a 50 blade rotor and of the order of 0.003 seconds for a 100 blade rotor.

The reading rate for the laser gage must be greater than the blade passing rate, i.e., the gage reading time must be less than the blade-to-blade time interval to provide individual blade measurements.

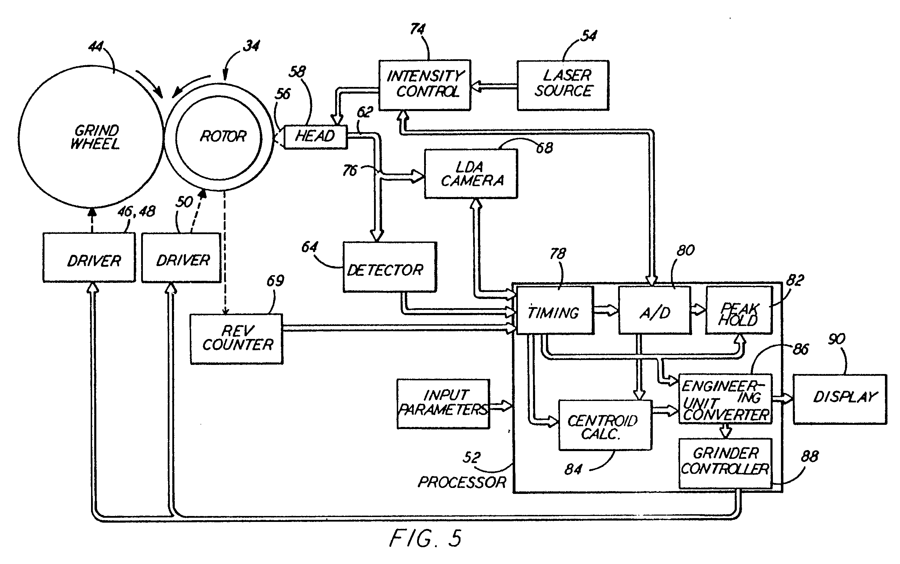

In summary, for larger turbine engine parts having 50—100 or more blades in a rotor assembly the grinding speeds are in the range of 1000—2000 r.p.m. For small rotors, the speeds will be substantially higher. In both large and small rotors there are present high tangential tip velocities in the range 25—72 m/s and interval times of 0.0012 seconds or less. However, in some of the largest parts machined using the apparatus of the present invention, the acceleration criterion may not be met. For example, a gas turbine fan typically has a radius OR of 1 m. Owing to the adaptation of fans to efficiently move air at low speeds, to run them at the 1000—2000 r.p.m. required to meet the acceleration criterion would require undue amounts of power. Thus, while fans will be rotated at about 500 r.p.m., the tip velocity will nonetheless be about 52 m/s and the interval time will be of the order of 0.004 seconds for a typical 30-blade fan. The invention embodies a system having a reading rate which is better than the time interval of blade passage. Figure 5 schematically illustrates the elements of the gaging portion of the apparatus. A laser source 54 such as a Hughes 5 mw helium neon laser delivers a beam, through an intensity controller 74, to a head 58 which obliquely impinges a focused laser beam 56 on the tips 27 of the passing blades 26 of the rotor assembly 34. Impingement normal to the blade tips may be used as well. The reflected beam spot is received by the head, focused and conveyed by a coherent optical fibre bundle 62 to a beam splitter 76, a portion of the beam is imaged onto a silicon photo diode detector 64 and another portion of the beam is imaged onto a linear diode array camera 68, such as a Fairchild CCD 1100 camera (Fairchild Camera Co., Mountain View, California). If sparks are a problem, a suitable filter is used. A clean nitrogen gas purge is used to keep dust and debris away from the head. The camera and detector are connected to provide signals to the processor 52. Additionally, a revolution counter 69 provides an angular position signal for each revolution of the spinning rotor assembly. Drivers 46, 48, 50 for the rotational motions of the rotor and grind wheel and the linear motion of the wheel are connected to the processor. The processor is comprised of a timing section 78, an analog to digital converter section 80, a peak hold section 82 a centroid calculation section 84, an engineering unit convertor 86 and a grinder controller 88. The processor also outputs to a display 90. The apparatus operates as follows. The beam 56 impinges on a blade tip and the reflected light is received by the detector 64 and the camera 68. The rev counter provides an angular position signal based on the periodic rotation of the rotor assembly thus enabling the timing section to calculate which blade is being measured. A simple pickup is suitable to enable identification of a reference blade. Based on the detector signal, the timing section commands the camera 68 to sample the light received and to deliver a signal about location and intensity of the light to the A/D section 80. Thus the detector acts as a trigger to detect the presence of a blade; the detector via the timing section provides a read command signal to the camera. The camera must have a suitably fast sampling and clearing rate, within the constraints of the aforementioned inter-blade time interval. The A/D section converts the camera information and sends it to the peak hold section 82 and the centroid calculation section 84. When commanded by the timing section, the peak hold section looks at the data stream signal received from the camera via the A/D section, holds a maximum value of the stream, compares the value to a preset range, and if there is a variance causes the intensity controller to raise or lower the light level delivered to the head, to eliminate the variance. Thus, the camera and other parts of the system are enabled to operate properly. The centroid calculator 84 is commanded by the timing·section to process the converted light signal information from the A/D unit. For the light which falls on the linear diode array in the camera, the unit 84 computes the centroid C' according to the relation

$$C' = \frac{\Sigma I \cdot P}{\Sigma I}$$

where I is the photo diode light intensity at a particular diode location and P is the particular diode location. This permits accurate, high resolution, determination of the position of a spot of light falling on the photo diode array. The centroid calculator accordingly delivers a blade length signal to the engineering unit convertor 86 which with timing unit input, outputs a display 90 showing the outside radius dimension (or blade length) for each blade location and the average for all blades. Additionally, the convertor 86 signals the grinder controller 88 which compares the data to preset limits and appropriately commands the drivers 46, 50 and especially the linear driver 48, to cause the mechanical elements of the system to continue or stop the grinding action. Ordinary elements of the system including those which enable control of the grinding rate according to the amount of remaining material on the blades are not shown because the manner of effecting such control is within the ordinary skill.

The apparatus is configured to provide real-time data; i.e. the reflected light signal is processed by unit 52 in less than the time interval between the passage of adjacent blades. The signal from a particular blade for a particular revolution is stored temporarily by the processor and the grinder controller does not act on the signal until the subsequent rotation of the rotor produces another signal which substantially replicates the first signal. This eliminates possible transient reading errors such as might be caused by sparks, dust, etc.

Preferably the blades are counted with respect to a reference point provided by the revolution counter 69 to permit their indivudual numeric identification. However, in the general mode of the invention the number of blades in the rotor can be input to the processor and repetitious counting can be used to provide blade lengths with a particular reference blade. In such a case the angular position signal referred to above would be provided by the counting of blade tip presence signals from the detector.

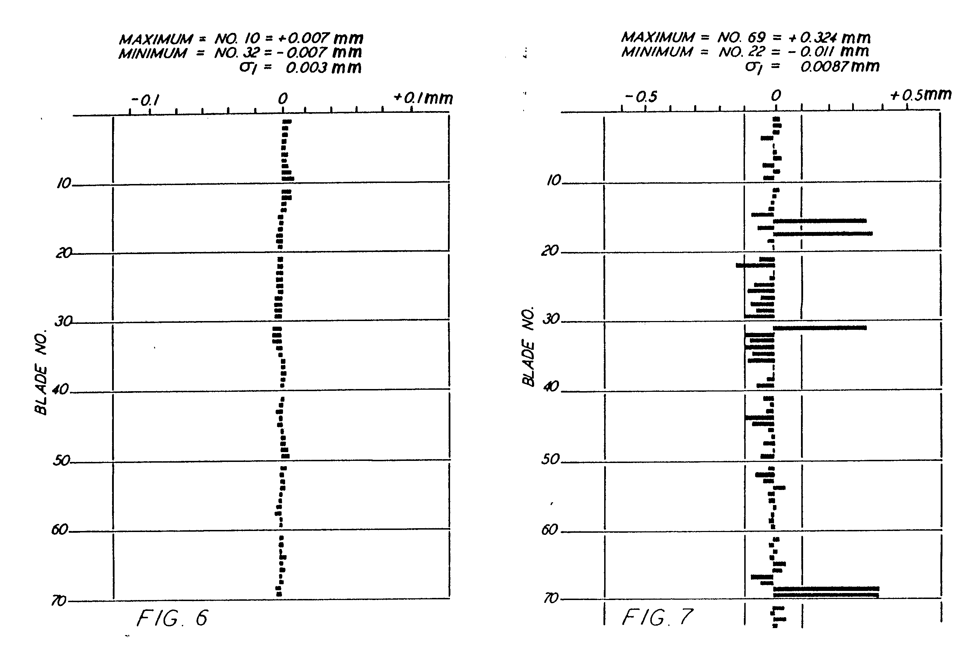

Figures 6 and 7 show typical blade length display data. Figure 7 shows a rotor which is deviant in that it contains several excessively long blades. For such a rotor it will be appreciated how the older average value of length would be misleading. It would be thought that the rotor had reached its dimension whereas in fact were such a rotor used, the longer blades would immediately damage the circumscribing seal and produce excess clearance between the predominate (short) blades and the seal. Poor engine efficiency would result. In contrast Figure 6 shows a rotor which has been accurately ground. The data show that the shortest blade is number 32, while the longest blade is number 10. Both are about an equal amount deviant from the average or baseline value, and the rotor is substantially within the desired accuracy of ±0,025 mm. See also the standard deviation value in the Figures. As indicated previously, prior art grinding techniques are now appreciated (through the use of the measuring invention) to have produced radial length variations of ±0,075 mm.

The invention now allows the selection of parameters which produce the desired high accuracies whereas previously there was no appreciation of the degree of problem which could result, except by observing the deleterious performance of the ground rotor assemblies. Rotor speeds and grinding feed rates can be set during the actual processing of a part.

The invention also permits remedial actions to be taken. For example, referring again to Figure 7, it is evident that further grinding is indicated (at better parameters if the rotor has already been ground), to reduce the length of the few longer blades. Also, blade 22 is seen to be about 0.015 mm short. Suppose it was even shorter, substantially below the target OR dimension. There is no way to remedy this except by replacing the blade with on which is longer, and this action would be indicated.

In a more general sense, if a rotor assembly is comprised of both used (short) and new (long) blades, the invention may be used to identify a portion of the blades which are under the desired OR dimension. A criterion is set beforehand based on the summation of the number of blades and their respective shortness which is permitted in a rotor. This is reflective of the effective annular gap which the short blades will effectively produce as they sweep around the blade path, compared to the total annular gap which the entirety of all the blades sweeps. Grinding is undertaken and dynamic length measurements are taken for the rotor assembly. An average is calculated and the summation of short blades and lengths is compared to the summation criterion (which was based on the engineering judgment of permissible leakage in an engine). If the measured assembly fails to meet the criterion, then some of the short blades are replaced with longer blades. Another dynamic reading is taken and assessed against the criterion. If certain blades are now too long (which is probable), the grinding, reading and comparing are repeated. Thus, the invention allows efficient use of used components.

The grinding procedure is critical to obtaining the desired high accuracy and thus is described in more detail.

The driver 48 is actuated to translate (infeed) the grinding wheel 44 in the direction of arrow 72 toward the centerline of rotation of the rotor assembly. The grinding wheel is fed at a first high speed followed by a progressive slowing down to a final infeed rate, up to a stop position, where there is usually dwell to enable "sparking out". A very slow and precisely controlled final infeed rate of about 0,0004 m/s is used to obtain good accuracy and to prevent the presence of a burr.

The grinding wheel is infed to a final location which generates a measured value of the predetermined 2000 rpm radius OR'. The radius OR' is less than the radius OR'' which the assembly assumes during use and it is greater than the radius OR which is the ordinarily specified desired static dimension of the rotor assembly, assuming proper seating of the blades. The relationship between the various outside radii is a function of the degree of proper seating and the extent of elastic deformation under rotation. In the invention, there is a convenient method for achieving the desired OR dimension. The rotor is measured at two incremental speeds, e.g., at 1000 and 2000 rpm. This provides an actual elastic strain measurement and enables extrapolation of the 0—2000 rpm radial strain. Thus, the radius OR' at the speed of grinding, e.g., at 2000 rpm, can accurately be determined for a given specification of OR.

The laser measuring system permits measurements of individual blade lengths. With this capability, certain criticalities in the grinding process have been discovered which when complied with enable the achievement of better accuracies than heretofore possible.

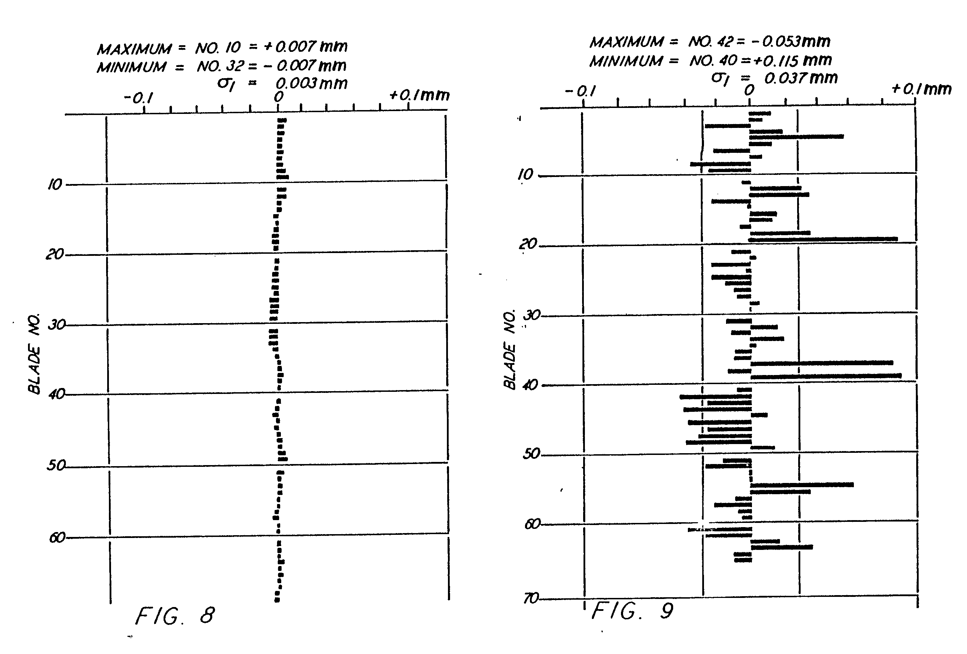

The laser gage dimensional data are shown in the Figures 8 and 9. The total variations, from a baseline OR' as shown, together with the standard deviation Δl. Figure 8 shows a rotor assembly ground at high speed and having very uniform blades, with less than ±0.025 mm variation. Figure 9 shows the kind of results which will be produced when too low a rotational speed is used. It is seen that there is substantial variation (although still small in an absolute sense). It is hypothesized that during grinding all the longer blades deflect to varying slight degrees as compared to the minimum length blades.

Based on analysis of such data there are certain general conclusions. There is a critical direction and speed which a rotor must achieve during grinding. First the rotation must be in a direction which causes on the blades tangential fluid dynamic (and grinding) forces which act in the same direction as occur in the actual use of the assembly. That is, airfoil blades have opposing convex and concave sides. Blades which compress gases rotate in the direction of the concave side while turbine section blades which expand gases rotate in the direction of the convex side. However, in both instances the working gas of the engine impinges on the concave side of the airfoil, and it is in this direction which the airfoil must move during machining. Such motion causes the blade to tend to aerodynamically function by imparting motion to the surrounding air during machining. Previously, it has often been thought desirable to rotate the assembly in the opposite convex direction, to lower the power required to rotate the rotor. Second, the rotor assembly must achieve a certain minimum speed. This speed is characterized alternately in terms of the airflow which the rotor produces or in terms of the acceleration which is produced in the blades. The rotational speed of a compressor from an axial flow turbomachine must first be sufficient to cause substantial axial flow of air during grinding, as opposed to the essentially radial flow which is caused at lower speeds. The airflow criticality is related to the requirement for rotational direction. Axial flow is indicative of the blades reaching a speed where they commence to be subjected to a relative flow similar to that which exists when they are used. Of course, such conditions require substantial horsepower, and this is the reason they have been avoided in the past. Precise measurements were not taken of when the flow mode change occurs, but it appeared to occur at about 1450 rpm for the PW2037 rotor. The manner of airflow is measurable with a suitable aerodynamic device, such as pitot tube or by a significant change in the slope of the power versus speed curve. Of course the flow mode is mixed even when the objective of the invention practice is achieved, since the rotor is uncontained. In the practice of the invention it will be noted that below the critical speed there is little discernible axial flow (parallel to the C axis in the Figures); radial flow predominates. At or above the critical speed there is substantial axial flow.

The speed of a bladed assembly must be such that a radial acceleration of at least 700 g produced on the blades. This second criticality is based on obtaining sufficient force to thrust the blades outwardly for two deduced purposes. First, the blades must be adequately seated in a manner similar to that in which they experience in engine use. Second, the blades must be subjected to a force sufficient to resist the contact forces produced by the medium which is mechanically removing material from the blade. This disruptive contact force is principally tangential but there is no doubt radial inward force as well. The phenomena underlying this aspect of the invention have not been intensively investigated but it appears that at lower speeds there is translation of the blade tips as they contact the grinding wheel. At too low a speed a rotor will be ground with blades which are both shorter and longer than the desired nominal length. It is presumed that a blade can be cocked (owing to the necessary loose fit of a removable blade in the disk slot) during grinding and not be restored to its true position during final grinding, regardless of the conventional dwell or "sparking out" at the end of the grind. There are other disruptive factors which dictate the high rotational speed required in the invention. Sealants are used on various stages of high pressure compressors, including rubber, ceramic and metal materials. Their resilience or uneven presence must be compensated for.

Unless the acceleration and airflow criteria set forth are achieved, an accuracy worse than ±0.025 mm on a 0.30 m radius will result. The rotational speed of compressor rotors must preferably be sufficient to achieve both the acceleration and airflow criteria, but the exact speed where each criteria is met will vary with the particular rotor assembly. At least the rotor should turn in the direction indicated above and at least it should rotate at a speed sufficient to generate the radial acceleration needed to resist the grinding forces. Higher speeds can be used but there is considerable noise, pumping of air, and additional horsepower required from the primary driver. Turbine rotors are designed for considerably higher gas temperatures and near sonic velocities. And on such rotors the meeting of the acceleration criterion alone will be sufficient for good results. In summary, the data indicate that the radial acceleration should be at least 700—750 g (6870—7360 m/s$^2$) and preferably 1100 g (10,800 m/s$^2$) or more. In the preferred practice of the invention a grinding wheel is used. Abrasive belts and other mechanical mediums for removing material from the tips of blades may be used in the practice of the invention, including single point tools. They will create problems similar to those described herein and will be within the scope of the practice of the invention. Electrical and energy beam methods of material also may be used.

The principles of the invention will be applicable as well to other configurations of rotor assemblies, including the more traditional axial slot designs referred to above. While the invention is described in terms of the machining of a bladed rotor assembly for a gas turbine engine, it should be understood that it will be equally applicable to the grinding of other rotatable assemblies of analogous character. In such instances of course the airflow criterion will not be relevant, but the acceleration and other parameters will be.

## Claims

1. The method of finishing to a desired dimension the tips of a plurality of blades mounted around the periphery of a rotor disk, which form a rotor assembly of an axial flow turbo-machine, the method comprising contacting the tips of the rotating blades at a point around the circumference of rotation with a medium which mechanically removes material therefrom characterized by rotating the rotor assembly about a rotor axis in a direction which moves the airfoil blades in the concave side direction so that air impinges on the blades in the same direction as it impinges during use of the axial flow turbo-machine and at a speed sufficient to cause a radial acceleration of at least 700 g (6,870 m/s$^2$) on the blades, the acceleration causing the blades to seat in the disk as during use, and in that the medium which contacts the blade tips is an abrasive surface moving in the same direction as the blade tips at the point of contact.

2. The method of claim 1 wherein the medium is a grinding wheel which rotates in a direction opposite to the direction of rotation of the rotor assembly and wherein the blades are made of titanium alloy characterized by rotating a grinding wheel abrasive surface with a wheel peripheral speed sufficient to maintain the relative velocity between the grinding wheel and the blade tips at the point of contact in the range 20—40 m/s.

3. The method of claim 2, characterized by infeeding the grinding wheel abrasive surface toward the blade tips at a rate of less than 0.0004 mm/sec to avoid the formation of a burr on the tips.

4. The method of anyone of the claims 1 to 3, characterized by:

(a) rotating the rotor assembly about an axis thereof in a first direction with a speed of at least 1000 rpm, the speed sufficient to move the tips along a circumferential path with a tangential velocity of at least 25 m/s, and to cause the blade tips to pass by a first circumferential path location with an interval time of less than 0.004 seconds;

(b) removing material from the blade tips at a first circumferential path location while the assembly is rotating at said speed; and

(c) measuring the radial location of each of the individual blade tips with respect to the axis as each blade passes by a second circumferential path location, while the assembly is rotating at said speed, to produce a blade length measurement by impinging on the blade tip a laser beam and measuring the position of the reflected spot thereof.

5. The method of claim 4 which comprises identifying each blade with respect to its angular position on the rotor assembly and correlating each blade length measurement with each identified blade, and calculating an average blade length measurement, to show the extent to which each individual blade varies from the average.

6. The method of claim 4 characterized by:

setting a summation criterion based on the number of short blades in a rotor assembly and the amount by which each short blade is deficient, wherein a short blade is one which does not at its tip extend to the desired outside radius of the assembly;

grinding away a portion of the tips of a number of blades and calculating an average radius of said ground tips, to make the average conform to the desired radius;

comparing the summation of blade and blade lengths shorter than said average to the summation criterion to determine whether the rotor assembly is acceptable or rejectable; and

removing at least one individual short blade from the rotor assembly and replacing it with a blade which is not short.

## Patentansprüche

1. Verfahren zum Fertigbearbeiten der Spitzen von mehreren Schaufeln, die an dem Umfang einer Läuferscheibe befestigt sind und mit dieser einen Läufer einer Axialströmungsmaschine bilden, auf ein gewünschtes Maß, wobei das Verfahren beinhaltet, die Spitzen der sich drehenden Schaufeln in einem Punkt am Drehungsumfang mit einem Mittel in Berührung zu bringen, welches Material davon mechanisch abträgt, gekennzeichnet durch Drehen des Läufers um eine Läuferachse in einer Richtung, in der die mit Flügelprofil versehenen Schaufeln in Richtung der konkaven Seite bewegt werden, so daß Luft auf die Schaufeln in derselben Richtung auftrifft, in die sie im Gebrauch der Axialströmungsmaschine auftrifft, und mit einer Geschwindigkeit, die ausreicht, um eine radiale Beschleunigung von wenigstens 700 g (6,870 m/s²) an den Schaufeln hervorzurufen, wobei die Beschleunigung bewirkt, daß die Schaufeln wie im Gebrauch in der Scheibe sitzen, und daß das Mittel, welches die Schaufelspitzen berührt, eine Schleiffläche ist, die sich in dem Berührungspunkt in derselben Richtung wie die Schaufelspitzen bewegt.

2. Verfahren nach Anspruch 1, wobei das Mittel ein Schleifrad ist, welches sich in einer Richtung dreht, die zu der Drehrichtung des Läufers entgegengesetzt ist, und wobei die Schaufeln aus Titanlegierung hergestellt sind, gekennzeichnet, durch Drehen einer Schleifradschleiffläche mit einer Radumfangsgeschwindigkeit, die ausreicht, um die Relativgeschwindigkeit zwischen dem Schleifrad und den Schaufelspitzen in dem Berührungspunkt in dem Bereich von 20—40 m/s zu halten.

3. Verfahren nach Anspruch 2, gekennzeichnet, durch Bewegen der Schleifradschleiffläche zu den Schaufelspitzen mit einer Vorschubgeschwindigkeit von weniger als 0,0004 mm/s, um die Bildung eines Grats an den Spitzen zu vermeiden.

4. Verfahren nach einem der Ansprüche 1 bis 3, gekennzeichnet durch:

(a) Drehen des Läufers um eine Achse desselben in einer ersten Richtung mit einer Drehzahl von wenigstens 100 U/min, wobei die Drehzahl ausreicht, um die Spitzen auf einer Umgangsbahn mit einer Tangentialgeschwindigkeit von wenigstens 25 m/s zu bewegen und die Schaufelspitzen einen ersten Umfangsbahnort mit einer Intervallzeit von weniger als 0,004 s passieren zu lassen;

(b) Abtragen von Material von den Schaufelspitzen an einem ersten Umfangsbahnort, während sich der Läufer mit dieser Drehzahl dreht; und

(c) Messen des radialen Ortes jeder einzelnen Schaufelspitze in bezug auf die Achse, wenn jede Schaufel einen zweiten Umfangsbahnort passiert, während sich der Läufer mit dieser Drehzahl dreht, um einen Schaufellängenmeßwert zu erzeugen, durch Auftreffenlassen eines Laserstrahls auf die Schaufelspitze und Messen der Position von dessen reflektiertem Fleck.

5. Verfahren nach Anspruch 4, welches beinhaltet, jede Schaufel in bezug auf ihre Winkelposition am Läufer zu identifizieren und jeden Schaufellängenmeßwert mit jeder identifizierten Schaufel zu korrelieren und einen mittleren Schaufellängenmeßwert zu berechnen, um das Ausmaß zu zeigen, in welchem jede einzelne Schaufel von dem Mittelwert abweicht.

6. Verfahren nach Anspruch 4, gekennzeichnet durch Festlegen eines Summenkriteriums auf der Basis der Anzahl von kurzen Schaufeln eines Läufers und des Ausmaßes, in welchem jede kurze Schaufel kürzer ist, wobei eine kurze Schaufel eine Schaufel ist, die sich an ihrer Spitze nicht bis zu dem gewünschten äußeren Radius des Läufers erstreckt;

Wegschleifen eines Teils der Spitzen einer Anzahl der Schaufeln und Berechnen eines mittleren Radius der geschliffenen Spitzen, um den Mittelwert dem gewünschten Radius anzupassen;

Verfleichen der Summe der Schaufeln und der Schaufellängen die kürzer sind als der Mittelwert, mit dem Summenkriterium, um festzustellen, ob der Läufer gut oder Ausschuß ist; und Entfernen wenigstens einer einzelnen kurzen Schaufel von dem Läufer und Ersetzen derselben durch eine Schaufel, die nicht kurz ist.

## Revendications

1. Procédé de finition à une dimension désirée des extrémités d'une pluralité d'ailettes montées autour de la périphérie d'un disque rotor, qui forme un ensemble rotor d'une turbomachine à flux axial, le procédé comprenant une mise en contact des extrémités des aillettes en rotation à un point situé autour de la circonférence de rotation avec un moyen qui en enlève mécaniquement du matériau caractérisé par la rotation de l'ensemble rotor autour d'un axe de rotor dans une direction qui déplace les ailettes du plan de sustentation dans la direction du côté concave de façon que de l'air frappe les ailettes dans la même direction qu'il les frappe pendant l'utilisation de la turbomachine à flux axial à une vitesse suffisante pour provoquer une accélération radiale d'au moins 700 g (6.870 m/s²) sur les ailettes, l'accélération amenant les ailettes à s'appuyer dans le disque comme pendant l'utilisation, et en ce que le moyen qui est en contact avec les extrémités d'ailettes est une surface abrasive se déplaçant dans la même direction que les extrémités d'ailettes au point de contact.

2. Procédé selon la revendication 1, dans lequel le moyen est une meule qui tourne dans une direction opposée à la direction de rotation de l'ensemble rotor et dans lequel les ailettes sont réalisées en alliage de titane caractérisé par la rotation d'une surface abrasive de meule avec une vitesse périphérique de meule suffisante pour maintenir la vitesse relative entre la meule et les extrémités d'ailettes au point de contact dans la plage de 20—40 m/s.

3. Procédé selon la revendication 2, caractérisé par l'avance de la surface abrasive de meule vers les extrémités d'ailettes à une vitesse inférieur à 0,0004 mm/s pour éviter la formation de bavures sur les extrémités.

4. Procédé selon l'une quelconque des revendications 1 à 3, caractérisé par:

(a) la mise en rotation de l'ensemble rotor autour de son axe dans une première direction à une vitesse d'au moins 100 tours/minute, la vitesse suffisante pour déplacer les extrémités le long d'une trajectoire circonférentielle avec une vitesse tangentielle d'au moins 25 m/s, et pour amener les extrémités d'ailettes à passer par un premier emplacement de trajectoire circonférentielle avec un intervalle de temps inférieur à 0,004 secondes;

(b) l'enlèvement de matériau des extrémités d'ailettes à un premier emplacement de trajectoire circonferentielle tandis que l'ensemble tourne à ladite vitesse; et

(c) la mesure de l'emplacement radial de chacune des extrémités d'ailettes individuelles par rapport à l'axe quand chaque ailette passe par un deuxième emplacement de trajectoire circonférentielle, tandis que l'ensemble tourne à ladite vitesse, pour produire une mesure de longueur d'ailette, en frappant l'extrémité d'ailette par un faisceau laser et un mesurant la position de son point réfléchi.

5. Procédé selon la revendication 4 qui comprend l'identification de chaque ailette selon sa position angulaire sur l'ensemble rotor et l'établissement d'une corrélation de la mesure de longueur de chaque ailette avec chaque ailette identifiée, et un calcul de mesure de la longueur moyenne d'une ailette, pour indiquer dans quelle mesure chaque ailette individuelle diffère de la moyenne.

6. Procédé selon la revendication 4, caractérisé par:

l'établissement d'un critère de sommation basé sur le nombre d'ailettes courtes dans un ensemble rotor et la quantité manquant à chaque ailette courte, étant entendu qu'une ailette courte est une ailette que ne s'étend pas à son extrémité jusqu'au rayon extérieur désiré de l'ensemble;

la rectification d'une partie des extrémités d'un certain nombre des ailettes et le calcul d'un rayon moyen desdites extrémités meulées, pour obtenir la moyenne conforme au rayon désiré;

la comparaison de la sommation des ailettes et des longueurs d'ailettes plus courtes que ladite moyenne au critère de sommation pour déterminer si l'ensemble rotor est acceptable ou à rejeter; et

l'enlèvement d'au moins une ailette courte individuelle de l'ensemble rotor et son remplacement par une ailette qui n'est pas courte.

FIG.1

FIG. 2

FIG. 3

FIG. 4

FIG. 5

MAXIMUM = NO. 69 = + 0.324 mm
MINIMUM = NO. 22 = − 0.011 mm
$\sigma_1$ = 0.0087mm

+0.5mm

0

−0.5

BLADE NO.

10 20 30 40 50 60 70

FIG. 7

MAXIMUM = NO. 10 = + 0.007 mm
MINIMUM = NO. 32 = − 0.007 mm
$\sigma_1$ = 0.003 mm

+0.1mm

0

−0.1

BLADE NO.

10 20 30 40 50 60 70

FIG. 6

6

MAXIMUM = NO. 10 = + 0.007 mm
MINIMUM = NO. 32 = − 0.007 mm
$\sigma_1$ = 0.003 mm

−0.1      0      +0.1mm

BLADE NO.

10
20
30
40
50
60

FIG. 8

MAXIMUM = NO. 42 = −0.053mm
MINIMUM = NO. 40 = +0.115 mm
$\sigma_1$ = 0.037 mm

−0.1      0      +0.1mm

BLADE NO.

10
20
30
40
50
60
70

FIG. 9